# EUROPEAN PATENT APPLICATION

(11) **EP 4 748 891 A1**
(43) Date of publication of application: **27.05.2026**
(21) Application number: 24842866.6
(22) Date of filing: 17.06.2024
(51) Int. Cl.: C08L 101/00, C08K 5/14, C08L 21/00, G02B 5/22

(54) **RUBBER COMPOSITION**

(30) Priority: 18.07.2023 JP 2023116937
(71) Applicant: NOK Corporation, Tokyo 105-8585 (JP)
(72) Inventor: WATANABE, Isao, Tsujido-shinmachi, Fujisawa-shi Kanagawa 251-0042 (JP); OSADA, Kentaro, Tsujido-shinmachi, Fujisawa-shi Kanagawa 251-0042 (JP)
(74) Representative: TBK
(86) International application number: PCT/JP2024/021801
(87) International publication number: WO 2025/018070

(57) **Abstract**

A rubber composition includes (A) a polymer, (B) a crosslinking agent, and (C) a colorant, wherein the colorant (C) does not contain an inorganic black pigment, a minimum transmittance in a wavelength of 800 to 1600nm is 50% or more and a minimum transmittance in a wavelength of 900 to 1100nm is 80% or more, and a maximum transmittance in a wavelength of 300 to 700nm is 40% or less and a maximum transmittance in a wavelength of 300 to 650nm is 1% or less in a rubber sheet.

## Description

### TECHNICAL FIELD

The present invention relates to a rubber composition.

### Description of the Related Art

### BACKGROUND ART

Near-infrared rays are widely used for on-vehicle sensors, biometric authentication sensors, biological applications, and the like, and the use thereof is expected to be further expanded in the future. In various sensors using the above-described near-infrared rays, resins that selectively absorb light of a specific wavelength are widely used (see, for example, Patent Documents 1 to 9).

For example, a selected wavelength absorption resin composition for LiDAR that detects a distance or an azimuth to an object is disclosed in Patent Document 1. The "LiDAR" is an abbreviation of Light Detection and Ranging, and is a technique for measuring a distance and an angle to an object by irradiating the object with laser light while scanning and observing the reflected light.

The selected wavelength absorption resin composition for LiDAR disclosed in Patent Document 1 contains an epoxy resin as a main component, and a cured body of the resin composition formed to have a thickness of 1mm has an average light transmittance of 40% or less within a wavelength range of 380nm to 700nm, and a transmittance in a wavelength of 80% or more in the wavelength (850nm to 950nm, 1500nm to 1600nm) of a laser beam used in the LiDAR.

Patent Documents 2 and 3 disclose resins containing polycarbonate as wavelength-selective transmissive resins for LiDAR. For example, Patent Document 2 discloses a polycarbonate resin composition having wavelength-selective transmissivity, and Patent Document 3 discloses a thermoplastic resin containing a polycarbonate resin. Patent Documents 2 and 3 propose a technique for defining the type of wavelength-absorbing dye for the resin containing polycarbonate described above.

Patent Document 4 discloses a thermoplastic resin composition containing a thermoplastic resin and a coloring material. In the thermoplastic resin composition disclosed in Patent Document 4, when the thickness of the resin composition is 1mm, the maximum transmittance in a wavelength of 380 to 630nm is 1% or less, and the average transmittance of 840 to 940nm is 80% or more. Patent Document 4 also discloses a technique for defining a pigment or the like to be used as a coloring material, and that the thermoplastic resin composition is used for an optical lens, an infrared camera lens, a lens for a biometric authentication camera, and the like.

Patent Document 5 discloses an optical film capable of absorbing a specific wavelength by a plurality of filters. The optical film disclosed in Patent Document 5 includes a near-infrared blocking layer having an absorption maximum in a wavelength of 600 to 800nm, and is used for a biometric authentication device and an imaging device.

Patent Document 6 discloses an optical filter containing a green dye and a black dye. The optical filter disclosed in Patent Document 6 includes a structure having an average transmittance of 400 to 730nm of 2% or less and having a continuous wavelength range of 50nm where the average transmittance is 80% or more within 800 to 1000nm. In the optical filter disclosed in Patent Document 6, the green dye and the black dye are present in a state of being dispersed or dissolved in a transparent resin. The optical filter disclosed in Patent Document 6 is used for an imaging device, an infrared sensor, a biometric authentication device, and a three-dimensional distance image camera.

Further, Patent Documents 7 to 9 propose a visible-light-shielding silicone rubber composition using silicone rubber and an infrared transmitting composition.

### CITATION LIST

### Patent Literature

Patent Document 1: JP-B-6899061
Patent Document 2: JP-A-2021-147470
Patent Document 3: International Publication WO2021/025097
Patent Document 4: International Publication WO2020/138050
Patent Document 5: JP-A-2020-177147
Patent Document 6: JP-B-6662299
Patent Document 7: JP-B-5170463
Patent Document 8: JP-A-2021-70772
Patent Document 9: JP-A-2019-131806

### SUMMARY OF THE INVENTION

### Problems solved by the Invention

In the resin compositions that selectively absorb light of a specific wavelength disclosed in Patent Documents 1 to 6, since a resin is used as a main component, the cured body (resin) is hard and has poor flexibility. For this reason, the resin compositions disclosed in Patent Documents 1 to 6 have problems in that the cured body is likely to be cracked and in that the followability to deformation is low.

In addition, the rubber compositions disclosed in Patent Documents 7 to 9 have a problem of poor selectivity of light having a necessary wavelength. That is, since the rubber, which is a cured body of rubber compositions, generally has low transparency, carbon black or the like is added to the rubber composition, for example. In the rubber composed of such a rubber composition, the colorant such as carbon black absorbs light in a wide range from visible light to infrared light, and it is usually difficult to obtain transmissivity of infrared light. On the other hand, transparent rubber is also generally present, but such transparent rubber transmits a wide range of light from ultraviolet to visible light to infrared light, and it is difficult to selectively transmit light having a necessary wavelength.

Currently, for example, a silicone semiconductor laser having a wavelength of 905nm is used for a sensor or the like using light of a specific wavelength. Such a silicone semiconductor laser has an advantage of being inexpensive and low in power consumption. However, since the laser light is close to visible light and affects the retina, the output of the laser cannot be increased, and the laser light is greatly affected by sunlight. In recent years, the use of indium gallium arsenide phosphide (InGaAsP) semiconductor laser of wavelength of 1550nm has also been studied as a second-generation mechaless technique. Although InGaAsP semiconductor laser has high cost/power consumption, it has the advantage of having less effect on the retina, the ability to increase output, and being less affected by sunlight.

In the rubber compositions disclosed in the above-described Patent Documents 7 to 9, the defined infrared transmission range is 800nm or 800 to 900nm, and in order to provide versatility to the above-described various lasers, there is an increasing demand for a wider range of infrared transmissivity.

In particular, among the above-described rubber compositions, silicone rubber (vinyl methyl silicone rubber (VMQ)) is known to have low mechanical strength, and further, slightly poor resistance (chemical resistance) to a strongly acidic solution, a strongly alkaline solution, a silicone oil, chlorine water, and the like. On the other hand, it is known that fluororubber (FKM) and ethylene propylene diene rubber (EPDM) exhibit superior properties to silicone rubber with respect to their mechanical strength and chemical resistance.

In order to improve properties such as mechanical strength and chemical resistance in these rubber compositions, for example, a rubber composition is prepared by blending a combination of a plurality of organic colorants without blending well-known carbon black conventionally used for reinforcing rubber or the like. Accordingly, a rubber composition has been proposed which absorbs visible light, which is an obstacle when used in a sensor or the like, in a wide wavelength region, and further has excellent properties of selectively transmitting infrared light. However, it is further expected to develop a highly functional rubber composition that further improves the minimum transmittance, particularly in the wavelength region of near-infrared light.

The present invention has been made in view of the problems of the prior art, and in particular, provides a rubber composition capable of obtaining a rubber material that absorbs visible light, which is an obstacle to sensor or the like, in a wide range and selectively transmits infrared light, and having improved transmittance in a wavelength region of near-infrared light.

### Means for Solving the Problem

According to the present invention, the rubber composition shown below is provided.
[1] A rubber composition comprising (A) a polymer, (B) a crosslinking agent, and (C) a colorant, wherein the colorant (C) does not contain an inorganic black pigment, a minimum transmittance in a wavelength of 800 to 1600nm is 50% or more and a minimum transmittance in a wavelength of 900 to 1100nm is 80% or more, and a maximum transmittance in a wavelength of 300 to 700nm is 40% or less and a maximum transmittance in a wavelength of 300 to 650nm is 1% or less in a rubber sheet.
[2] The rubber composition according to [1], which contains two or more kinds of organic colorants for shielding visible light as the colorant (C).
[3] The rubber composition according to [2], wherein the organic colorant is an oil-soluble dye.
[4] The rubber composition according to [3], wherein at least one of the oil-soluble dyes is an anthraquinone-based dye.
[5] The rubber composition according to [4], which contains an organic peroxide as the crosslinking agent (B).
[6] The rubber composition according to any one of [1] to [5], which is used in a product using infrared light having a wavelength of 800 to 1600nm.
[7] The rubber composition according to any one of [1] to [5], which is used for selective wavelength absorption for LiDAR and a cover thereof.
[8] The rubber composition according to any one of [1] to [5], which is used for an optical lens, an infrared camera lens, a lens for a biometric authentication camera, and covers thereof.
[9] The rubber composition according to any one of [1] to [5], which is used for a biometric authentication device and a cover thereof.
[10] The rubber composition according to any one of [1] to [5], which is used for an imaging device and a cover thereof.
[11] The rubber composition according to any one of [1] to [5], which is used for a three-dimensional distance image camera and a cover thereof.
[12] The rubber composition according to any one of [1] to [5], which is used for infrared communication.
[13] The rubber composition according to any one of [1] to [5], which is used in a near-infrared spectrometer.
[14] The rubber composition according to any one of [1] to [5], which is integrally formed as a visible light filter having a sealing property.

### Advantageous Effects of Invention

According to the rubber composition of the present invention, it is possible to obtain a rubber material that absorbs visible light, which is an obstacle to sensor or the like, in a wide range and selectively transmits infrared light. In particular, the rubber composition does not contain an inorganic black pigment such as carbon black, which is widely used for reinforcing rubber or the like, and thus is excellent in transmissivity to infrared light. Further, compared with the resin material, the rubber composition is excellent in flexibility, can be applied to a product with deformation, and contributes to an improvement in the design freedom of the entire apparatus using the rubber material. Further, compared with the resin material, the impact absorbing property is improved, and the occurrence of breakage such as cracking can be extremely effectively prevented. In particular, a highly functional rubber-material can be obtained that exhibits a high transmission performance in which the transmittance in a wavelength of 650nm or less is suppressed to 1% or less and the transmittance in a wavelength of 800nm or more is 80% or more in the wavelength region of the near-infrared light.

### DESCRIPTION OF EMBODIMENTS

Hereinafter, embodiments of the present invention will be described; however, the present invention is not limited to the following embodiments. Therefore, it should be understood that those created by making changes, improvements or the like to the following embodiments as appropriate based on ordinary knowledge of one skilled in the art without departing from the spirit of the present invention are also covered by the scope of the present invention.

### [Rubber Composition]

One embodiment of the rubber composition is a rubber composition comprising (A) a polymer, (B) a crosslinking agent, and (C) a colorant, wherein the colorant (C) does not contain an inorganic black pigment. In the rubber composition of the present embodiment, a minimum transmittance in a wavelength of 800 to 1600nm is 50% or more and a minimum transmittance in a wavelength of 900 to 1100nm is 80% or more, a maximum transmittance in a wavelength of 300 to 700nm is 40% or less and a maximum transmittance in a wavelength of 300 to 650nm is 1% or less in a rubber sheet. The rubber composition of the present embodiment can obtain a rubber material that absorbs visible light, which is an obstacle to sensor or the like, in a wide range and selectively transmits infrared light. In particular, the rubber composition of the present embodiment does not contain an inorganic black pigment, and thus is excellent in transmissivity to infrared rays. Further, compared with the resin material, the rubber composition is excellent in flexibility, can be applied to a product with deformation, and contributes to an improvement in the design freedom of the entire apparatus using the rubber material. Further, compared with the resin material, the impact absorbing property is improved, and the occurrence of breakage such as cracking can be effectively prevented.

Here, the inorganic black pigment is a pigment made of an inorganic compound, and means a pigment having a black to brown color when a rubber material is formed by using the pigment as a coloring material. For example, the inorganic black pigment may include inorganic oxides such as titanium black and triiron tetraoxide (iron black) or known inorganic pigments such as carbon black. The rubber composition of the present embodiment does not substantially contain such an inorganic black pigment. In the rubber composition of the present embodiment, "the colorant (C) does not contain an inorganic black pigment" means that the each component constituting the rubber composition does not substantially contain an inorganic black pigment. That is, "the colorant (C) does not contain an inorganic black pigment" means that the component other than the colorant (C) does not substantially contain an inorganic black pigment. In addition, the term "does not substantially contain" an inorganic black pigment means that the inorganic black pigment is not actively (in other words, intentionally) blended except when the inorganic black pigment is inevitably mixed. Therefore, the rubber composition of the present embodiment may contain an extremely small amount of a black inorganic compound as an inevitable impurity. The upper limit of the allowable concentration of the inevitable impurity varies depending on various conditions, and for example, it is preferably not more than an amount that does not substantially affect the minimum transmittance in a wavelength of 800 to 1600nm and in a wavelength of 900 to 1100nm and the maximum transmittance in a wavelength of 300 to 700nm and in a wavelength of 300nm to 650nm in the rubber sheet. For example, the amount of the inorganic black pigment as an inevitable impurity is preferably 0.001 parts by mass or less (i.e., 10ppm or less) with respect to 100 parts by mass of the polymer (A).

The rubber composition of the present embodiment can be formed, for example, as a rubber sheet having a predetermined thickness. The thickness of the rubber sheet is not particularly limited, and for example, a rubber sheet having a thickness of 0.5mm to 2mm can be suitably used. That is, when the thickness of the rubber sheet is in the range of 0.5mm to 2mm, the minimum transmittance in a wavelength of 800 to 1600nm may be 50% or more and the minimum transmittance in a wavelength of 900 to 1100nm may be 80% or more, and the maximum transmittance in a wavelength of 300 to 700nm may be 40% or less and the maximum transmittance in a wavelength of 300nm to 650nm may be 1% or less in the rubber sheet. The transmittance in each wavelength range can be measured using, for example, an ultraviolet-visible near-infrared spectrophotometer. Examples of such a spectrophotometer include a spectrophotometer (V-770 (trade name)) manufactured by JASCO Corporation. The transmittance in the wavelength ranges of 800 to 1600nm and 900 to 1100nm is measured by a spectrophotometer for each 1nm in the range, and the minimum value (the lowest value) of the measured transmittance is defined as the "minimum transmittance". The transmittance in the wavelength ranges of 300 to 700nm and 300nm to 650nm is measured by a spectrophotometer for each 1nm in the range, and the maximum value (the highest value) of the measured transmittance is defined as the "maximum transmittance".

Further, when the minimum transmittance in a wavelength of 800 to 1600nm is 50% or more and the minimum transmittance in a wavelength of 900 to 1100nm is 80% or more, the rubber composition of the present embodiment is excellent in transmissivity to infrared light. In addition, when the maximum transmittance in a wavelength of 300 to 700nm is 40% or less and the maximum transmittance in a wavelength of 300 to 650nm is 1% or less, it is possible to effectively prevent the transmission of visible light, which is an obstacle to sensor or the like.

Further, in the rubber composition of the present embodiment, the minimum transmittance in a wavelength of 800 to 1600nm is preferably 60% or more. With such a configuration, it becomes extremely excellent in transmissivity to infrared light. In the rubber composition of the present embodiment, the minimum transmittance in a wavelength of 900 to 1100nm is preferably 80% or more. With such a configuration, it becomes more excellent in transmissivity to infrared light of a specific wavelength.

An upper limit of the minimum transmittance in a wavelength of 800 to 1600nm and in a wavelength 900 to 1100nm is not particularly limited. For example, the upper limit of the minimum transmittance may be 100% or 90%. A lower limit of the maximum transmittance in a wavelength of 300 to 700nm and in a wavelength of 300 to 650nm is not particularly limited. For example, the lower limit of the maximum transmittance may be 0%.

A method for manufacturing a rubber sheet having a predetermined thickness from the rubber composition of the present embodiment is not particularly limited, but for example, the rubber sheet can be manufactured by the following method. First, a rubber composition of the present embodiment is prepared as a raw material for manufacturing the rubber sheet. As for the rubber composition used for manufacturing the rubber sheet, for example, it is preferable that the rubber composition is kneaded in an open roll and kneaded until the contained components become uniform, and the rubber composition is cut into a sheet form to obtain a rubber base material. Next, the prepared rubber composition is placed in a mold having a depth of 1.9 to 2.0mm. When the rubber composition is placed in the mold, the amount of the rubber composition is adjusted so that the thickness of the rubber sheet obtained by vulcanization becomes 2mm. For example, the method for manufacturing the rubber sheet can be referred to the "Rubber test mixes-Preparation, mixing and vulcanization-Equipment and procedures" in JIS K6299:2012. Next, the rubber composition contained in the mold is subjected to press vulcanization. For the vulcanization conditions (temperature, time), the vulcanization rate (t90) of the rubber composition to be vulcanized is separately measured, and vulcanization is performed at t90 or more time (minutes). The vulcanization rate (t90) is the time (minutes) from the beginning of the measurement until the torque reaches 90% of the (MH-ML) when the maximum value of the torque is MH and the minimum value is ML in the vulcanization behavior measurement test of the unvulcanized rubber composition by the rheometer. When press vulcanization is performed, vulcanization is immediately terminated when t90 is exceeded. In this way, a rubber sheet having a thickness of 2mm is manufactured. When manufacturing a rubber sheet, take care not to touch the surface of the rubber sheet as the sample as much as possible so that foreign matter or other components do not adhere to the surface. When manufacturing rubber sheets having other thicknesses (for example, a rubber sheet having a thickness of 0.5mm), a mold having a depth that varies according to the desired thickness (for example, a mold having a depth of 0.4 to 0.5mm) can be used to manufacture the rubber sheet of any thickness.

The rubber composition of the present embodiment includes (A) a polymer, (B) a crosslinking agent, and (C) a colorant. For example, the components included in the rubber composition are not limited to the above-described components, and any rubber composition may be used as long as it does not contain an inorganic black pigment and is prepared so that the minimum transmittance in a wavelength of 800 to 1600nm is 50% or more and the minimum transmittance in a wavelength of 900 to 1100nm is 80% or more, and the maximum transmittance in a wavelength of 300 to 700nm is 40% or less and the maximum transmittance in a wavelength of 300 to 650nm is 1% or less in the rubber sheet. Hereinafter, the polymer (A) may be referred to as a component (A), the crosslinking agent (B) may be referred to as a component (B), and the colorant (C) may be referred to as a component (C).

As the polymer as a component (A), various known rubber polymers can be used. Examples of the general-purpose rubber include, but are not limited to, a natural rubber (NR), a butadiene rubber (BR), an isoprene rubber (IR), and a styrenebutadiene rubber (SBR). Examples of the special rubber include an acrylic rubber (ACM), an ethylene acrylate rubber (AEM), an ethylene propylene rubber (EPM), an ethylene propylene diene rubber (EPDM), a fluororubber (FKM), an epichlorohydrin rubber (ECO), a hydrogenated nitrile rubber (HNBR), a butyl rubber (IIR), an isoprene rubber (IR), an acrylonitrile butadiene rubber (NBR), a silicone rubber (a vinyl methyl silicone rubber (VMQ)), and an urethane rubber (U). By using such a polymer, it is possible to solve the problems of conventional resins, such as hardness and poor flexibility, and it is possible to suitably apply to the products with deformation.

As the polymer as a component (A), for example, a fluororubber (FKM) or an ethylene propylene diene rubber (EPDM) can be more preferably used because the transparency of the rubber can be further increased by using a peroxide crosslinking agent. Further, the fluororubber (FKM) and the ethylene propylene diene rubber (EPDM) have higher mechanical strength than, for example, a silicone rubber (VMQ) and have higher resistance to strong acids, strong alkalis, silicone oils, chlorine water, and the like.

As the crosslinking agent as a component (B), a crosslinking agent used in a known rubber composition, for example, a vulcanizing agent, a vulcanization aid, a vulcanization accelerator, or the like can be used. For example, a peroxide-based crosslinking agent, a polyol-based crosslinking agent, or the like can be selected as the crosslinking agent according to the purpose. Although not particularly limited, it is preferable to use an organic peroxide as the crosslinking agent in the rubber composition of the present embodiment.

The blending amount of the crosslinking agent is not particularly limited, and can be appropriately determined according to the type and the blending amount of the polymer as the component (A).

As the colorant as a component (C), a known colorant other than an inorganic black pigment can be used. In the rubber composition of the present embodiment, an organic colorant composed of an organic substance can be suitably used as the colorant. The color of the colorant is not particularly limited, and can be appropriately determined according to the use of the rubber composition and the like. However, since the colorant affects the transmittance, it is preferable to adjust the type and the blending amount of the colorant as appropriate in consideration of the transmittance in a wavelength of 800 to 1600nm and a wavelength of 900 to 1100nm, and in a wavelength of 300 to 700nm and a wavelength of 300 to 650nm. For example, although not particularly limited, the amount of the colorant as the component (C) is preferably 1 part by mass or less with respect to 100 parts by mass of the polymer as the component (A).

The rubber composition of the present embodiment preferably contains two or more kinds of organic colorants for shielding visible light as a colorant. With such a configuration, in the rubber material made of the rubber composition, it is possible to effectively obtain a rubber material that absorbs visible light, which is an obstacle to sensor or the like, in a wide range and selectively transmits infrared light. Even when two or more kinds of organic colorants are contained, the amount of the colorant of the component (C) is preferably 1 part by mass or less with respect to 100 parts by mass of the polymer of the component (A).

Examples of the organic colorant as the colorant include organic pigments. Examples of the red pigment include diketopyrrolopyrrole-based, anthraquinone-based, and perylene-based red pigments. Examples of the yellow pigment include isoindoline-based and anthraquinone-based yellow pigments. Examples of the blue pigment include copper phthalocyanine-based and anthraquinone-based blue pigments. Examples of the green pigment include phthalocyanine-based and isoindoline-based green pigments.

More preferably, the organic colorant may be a dye. Dyes are classified according to their chemical structure, and for example, azo dyes, stilbene dyes, triarylmethane dyes, acridine dyes, quinoline dyes, polymethine dyes, anthraquinone dyes, indigo dyes, phthalocyanine dyes, and the like are known. These dyes can be used without any particular limitation as long as they can be mixed with the component (A), but from the viewpoint of compatibility, oil-soluble dyes are particularly preferable.

The oil-soluble dyes are dyes that are insoluble or poorly soluble in water but easily soluble in organic solvents. Examples of the oil-soluble dyes are shown below, but a large number of other oil-soluble dyes can be obtained, and the oil-soluble dyes may be used in the rubber composition of the present invention.

Examples of the oil-soluble dyes include Rhodamine B acetate, tetrachlorotetrabromofluorescein, tetrabromofluorescein, Sudan III, Sudan IV, Sudan II, Quinizarin Green SS, Pyranine Conk, Sudan Blue, Dibromofluorescein, Diiodofluorescein, Orange SS, Quinoline Yellow SS, Yellow AB, Yellow OB, Quinizarin Blue, Sudan Black, phenylazolesorcinol, Solvent Red 197, Oil Violet, quinizarin, 4-phenylazo-1-naphthylamine, 4-(diethylamino)azobenzene, Methyl Yellow, Nile Red, Sudan I, Sudan R, p-phenylazophenol, and Solvent Black 5 (including trade names) .

The rubber composition of the present embodiment may contain other additives, but various additives need to be blended so that the minimum transmittance in a wavelength of 800 to 1600nm and in a wavelength of 900 to 1100nm and the maximum transmittance in a wavelength of 350 to 700nm and in a wavelength of 300 to 650nm in the rubber sheet fall within the numerical ranges described above. Other additives include, for example, processing aids, waxes, plasticizer, and the like. In addition, a filler such as a nanofiller may be contained within a range that does not impair the transmissivity of the resulting rubber material. The rubber composition of the present embodiment may be, for example, free of other additives in view of the effect on the transmissivity of the resulting rubber material.

The rubber composition of the present embodiment can be used as a product obtained by vulcanizing and molding the rubber composition. For example, the rubber composition can be used as a rubber product obtained by primary vulcanization of the rubber composition, or as a rubber product obtained by further performing secondary vulcanization depending on the properties of the rubber product. For example, the rubber composition of the present embodiment can be suitably used for a product using infrared light with a wavelength in the range of 800 to 1600nm (a part of a near-infrared spectrometer or an infrared communication device).

Further, although not particularly limited, the rubber composition of the present embodiment can be suitably used for selective wavelength absorption for LiDAR and a cover thereof, an optical lens, an infrared camera lens, a lens for a biometric authentication camera, and covers thereof, a biometric authentication device and a cover thereof, an imaging device and a cover thereof, a three-dimensional distance image camera and a cover thereof, and the like.

Further, the rubber composition of the present embodiment can be used in a wavelength filter (visible light filter) that can be attached to the above-described lenses or the like. Such a visible light filter can be configured to have a sealing property. That is, the rubber material formed from the rubber composition of the present embodiment has a specific transmissivity in a wavelength region of infrared light or near-infrared light, and has rubber elasticity that can be elastically deformed against stresses. Therefore, it is possible to integrally form a visible light filter making use of both properties and having a sealing property. As a result, it is possible to form a visible light filter that reduces the number of components, reduces costs, and the like.

### (Examples)

Hereinafter, the present invention will be described in more detail by examples, but the present invention is not at all limited by these examples.

### (Examples 1 to 5, Comparative Examples 1 to 4) [Sample Preparation]

Each component was weighed and blended so as to have a blending ratio (parts by mass) shown in Table 1 below, and then kneaded with an open roll until the each component became uniform to prepare the rubber compositions of Examples 1 to 5 and Comparative Examples 1 to 4. Next, the obtained rubber composition was cut into a sheet to obtain a rubber material, and the obtained rubber material was placed in a form having a depth of 2mm. Next, the rubber composition (rubber material) contained in the form was subjected to press vulcanization at 170°C for 12 minutes. As described above, the rubber sheets having a thickness of 0.5mm made of the rubber compositions of Examples 1 to 5 and Comparative Examples 1 to 4 were respectively prepared. When making a rubber sheet, we took care not to touch a surface of the rubber sheet so that foreign matters and other components did not adhere to the surface. As for Example 5, a rubber sheet was prepared using a mold having a depth of 0.5mm.

### [Component (A): Polymer]

(A-1): Ethylene propylene diene rubber ("EPT 3045H (trade name)"), manufactured by Mitsui Chemicals, Inc.

### [Component (B): Crosslinking agent (vulcanizing agent, vulcanization aid)]

(B-1): "PERCUMYL D (trade name)", manufactured by NOF Corporation.

### [Component (C): Colorant (organic colorant/non-organic colorant)]

(C-1): "Quinizarin Blue", manufactured by Tokyo Chemical Industry Co., Ltd.
(C-2): "Quinizaring Lean SS", Tokyo Chemical Industry Co., Ltd.
(C-3): "Sudan II (trade name) ", manufactured by Tokyo Chemical Industry Co., Ltd.
(C-4): "Rhodamine B base (trade name) ", manufactured by Kanto Chemical Co., Inc.
(C-5) 1-(methylamino)anthraquinone, manufactured by Tokyo Chemical Industry Co., Ltd.
(C-6): Carbon black (black colorant) ("THERMAX N990 (trade name)), Cancarb Limited.
(C-7): Iron oxide (red colorant) ("Brown 601" (trade name)), manufactured by Regino Color Industry Co., Ltd.
(C-8): Organic pigment ("Phthalocyanine blue"), manufactured by Regino Color Industry Co., Ltd.
(C-9): Organic pigment ("Pigment Yellow"), manufactured by Regino Color Industry Co., Ltd.

In Examples 1 to 5 and Comparative Examples 1 to 4, (A-1) ethylene propylene diene rubber was used as the component (A) and "PERCUMYL D (trade name)" was used as the component (B), and further, the component (B) was added at a blending ratio of 2 parts by mass with respect to 100 parts by mass of the component (A) and mixed to use. To the mixture of the components (A) and (B) thus prepared, the component (C) was further added as a colorant, according to Examples 1 to 5 and Comparative Examples 1 to 4, each type in its specified amount. The details are shown in Table 1 below.

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Component (A) | Polymer | A-1 | 100 | 100 | 100 | 100 | 100 | 100 | 100 | 100 | 100 |
| Component (B) | Crosslinking agent | B-1 | 2 | 2 | 2 | 2 | 2 | 2 | 2 | 2 | 2 |
| Component (C) | Organic colorant | C-1 | 0.1 | - | - | - | - | - | - | - | - |
| | | C-2 | 0.1 | 0.1 | 0.1 | 0.2 | 0.5 | - | - | - | - |
| | | C-3 | - | 0.1 | - | - | - | - | - | - | - |
| | | C-4 | - | 0.1 | - | - | - | - | - | - | - |
| | | C-5 | - | - | 0.1 | 0.2 | 0.5 | - | - | - | - |
| | Inorganic colorant | C-6 | - | - | - | - | - | - | 0.1 | - | - |
| | | C-7 | - | - | - | - | - | - | - | 0.1 | - |
| | | C-8 | - | - | - | - | - | - | - | - | 0.05 |
| | | C-9 | - | - | - | - | - | - | - | - | 0.05 |
| Thickness of Rubber sheet | | | 2mm | 2mm | 2mm | 2mm | 0.5mm | 2mm | 2mm | 2mm | 2mm |
| Transmittance of Rubber sheet | Minimum Transmittance of 800-1600nm/% | | 58.8 (1213nm) | 58.9 (1213nm) | 59.8 (1213nm) | 59.9 (1213nm) | 80.1 (1213nm) | 60.1 (1213nm) | <0.1 (837nm) | 1.6 (800nm) | 45.8 (1213nm) |
| | Judgment (Good: 50% or more) | | Good | Good | Good | Good | Good | Good | Fail | Fail | Fail |
| | Minimum Transmittance of 900-1100nm/% | | 83.8 (931nm) | 84.2 (930nm) | 86.5 (930nm) | 86.0 (931nm) | 88.2 (931nm) | 87.2 (931nm) | <0.1 (full range) | 3.8 (900nm) | 48.5 (900nm) |
| | Judgment (Good: 80% or more) | | Good | Good | Good | Good | Good | Good | Fail | Fail | Fail |
| | Maximum Transmittance of 300-700nm/% | | 14.2 (700nm) | 14.2 (700nm) | 16.2 (700nm) | 2.5 (700nm) | 7.1 (700nm) | 88.4 (700nm) | <0.1 (full range) | 0.6 (700nm) | 1.7 (538nm) |
| | Judgment (Good: 40% or less) | | Good | Good | Good | Good | Good | Fail | Good | Good | Good |
| | Maximum Transmittance of 300-650nm/% | | <0.1 (full range) | <0.1 (full range) | <0.1 (full range) | <0.1 (full range) | <0.1 (full range) | 86.9 (650nm) | <0.1 (full range) | 0.4 (382nm) | 1.7 (538nm) |
| | Judgment (Good: 1% or less) | | Good | Good | Good | Good | Good | Fail | Good | Good | Fail |

| | | | | | | | | | | | |
|---|---|---|---|---|---|---|---|---|---|---|---|
| Remarks ·The transmittance of the rubber sheet is as follows. In the column of "Maximum Tansmittance", the highest value (%) of the transmittance in the wavelength range and the wavelength (nm) thereof are described. In the column of "Minimum Transmittance", the lowest value (%) of the transmittance in the wavelength range and the wavelength (nm) thereof are described. In each of the above columns, when the transmittance is less than 0.1%, it is recorded as "<0.1". | | | | | | | | | | | |

In Example 1, the rubber composition was prepared by adding 2 parts by mass of the component (B) to 100 parts by mass of the component (A), and then adding 0.1 parts by mass (=0.1phr) of (C-1) and (C-2) as the component (C), respectively. Here, "phr" is a unit used for compounding rubber, and indicates how much weight of the compounding chemical or the compound needs to be added to a rubber having a weight of 100 (corresponding to the component (A)). Therefore, Example 1 includes a 2phr of the component (B) and a 0.1phr of two types of the component (C) with respect to the component (A) having a weight of 100.

Similarly, in Example 2, the rubber composition was prepared by blending the component (A) and the component (B) in the same amounts as in Example 1, and adding 0.1 parts by mass of (C-2), (C-3), and (C-4) as the component (C), respectively.

In Example 3, the rubber composition was prepared by blending the component (A) and the component (B) in the same amounts as in Example 1, and adding 0.1 parts by mass of (C-2) and (C-5) as the component (C), respectively.

In Example 4, the rubber composition was prepared by blending the component (A) and the component (B) in the same amounts as in Example 1, and adding 0.2 parts by mass of (C-2) and (C-5) as the component (C), respectively.

In Example 5, the rubber composition was prepared by blending the component (A) and the component (B) in the same amounts as in Example 1, and adding 0.5 parts by mass of (C-2) and (C-5) as the component (C), respectively.

In Comparative Example 1, the rubber composition was prepared by adding 2 parts by mass of the component (B) to 100 parts by mass of the component (A). That is, the composition was prepared without adding the component (C).

In Comparative Example 2, the rubber composition was prepared by blending the component (A) and the component (B) in the same amounts as in Comparative Example 1, and adding 0.1 parts by mass of Carbon black (C-6), which is a black colorant, as the component (C).

In Comparative Example 3, the rubber composition was prepared by blending the component (A) and the component (B) in the same amounts as in Comparative Example 1, and adding 0.1 parts by mass of Iron oxide (C-7), which is a red colorant, as the component (C).

In Comparative Example 4, the rubber composition was prepared by blending the components (A) and (B) in the same amount as in Comparative Example 1, and adding 0.05 parts by mass of (C-8) and (C-9) as the component (C), respectively.

For the rubber sheets having a thickness of 2mm (a thickness of 0.5mm in Example 5) made from the prepared rubber compositions of Examples 1 to 5 and Comparative Examples 1 to 4, "maximum transmittance (%) in a wavelength of 300 to 700nm", "maximum transmittance (%) in a wavelength of 300 to 650nm", and "minimum transmittance (%) in a wavelength of 800 to 1600nm", "minimum transmittance (%) in a wavelength of 900 to 1100nm" were measured in the following manner. The results of each measurement are shown in Table 1.

### Maximum Transmittance (%) in "wavelength of 300-700nm" and "wavelength of 300-650nm"

A spectrophotometer (V-770 (trade name)) manufactured by JASCO Corporation was used to measure the transmittance (%) of the rubber sheet to be measured in a wavelength in the range of 300 to 1600nm. Then, the highest value (%) of the transmittance in the wavelength of 300 to 700nm and the wavelength of 300 to 650nm and a wavelength (nm) at the value were determined. The highest value (%) of the transmittance in the wavelength of 300 to 700nm is defined as the "maximum transmittance (%) in a wavelength of 300 to 700nm", the highest value (%) of the transmittance in the wavelength of 300 to 650nm is defined as the " maximum transmittance (%) in a wavelength of 300 to 650nm", and the transmittances (%) and the wavelengths (nm) thereof are described in each column of Table 1. In addition, the maximum transmittances (%) in the wavelength of 300 to 700nm and in the wavelength of 300 to 650nm were evaluated based on the following evaluation criteria. The evaluation results are given in Table 1.

### <Evaluation Criteria>

### (1) Criteria for wavelength of 300-700nm

Evaluation "Good": When the maximum transmittance in a wavelength of 300 to 700nm is 40% or less, it is considered to be passed.

Evaluation "Fail": When the maximum transmittance in a wavelength of 300 to 700nm exceeds 40%, it is considered to be failed.

### (2) Criteria for wavelength of 300-650nm

Evaluation "Good": When the maximum transmittance in a wavelength of 300 to 650nm is 1% or less, it is considered to be passed.

Evaluation "Fail": When the maximum transmittance in a wavelength of 300 to 650nm exceeds 1%, it is considered to be failed.

### Minimum Transmittance (%) in "wavelength of 800-1600nm" and "wavelength of 900-1100nm"

A spectrophotometer (V-770 (trade name)) manufactured by JASCO Corporation was used to measure the transmittance (%) of the rubber sheet to be measured in a wavelength in the range of 300 to 1600nm. Then, the lowest value (%) of the transmittance in the wavelength of 800 to 1600nm and the wavelength of 900 to 1100nm and a wavelength (nm) at the value were determined. The lowest value (%) of the transmittance in the wavelength of 800 to 1600nm is defined as the "minimum transmittance (%) in a wavelength of 800 to 1600nm", the lowest value (%) of the transmittance in the wavelength of 900 to 1100nm is defined as the "minimum transmittance (%) in a wavelength of 900 to 1100nm", and the transmittances (%) and the wavelengths (nm) thereof are described in each column of Table 1. In addition, the minimum transmittances (%) in the wavelength of 800 to 1600nm and in the wavelength of 900 to 1100nm were evaluated based on the following evaluation criteria. The evaluation results are given in Table 1.

### <Evaluation Criteria>

### (3) Criteria for wavelength of 800-1600nm

Evaluation "Good": When the minimum transmittance in a wavelength of 800 to 1600nm is 50% or more, it is considered to be passed.

Evaluation "Fail": When the minimum transmittance in a wavelength of 800 to 1600nm is less than 50%, it is considered to be failed.

### (4) Criteria for wavelength of 900-1100nm

Evaluation "Good": When the minimum transmittance in a wavelength of 900 to 1100nm is 80% or more, it is considered to be passed.

Evaluation "Fail": When the minimum transmittance in a wavelength of 900 to 1100nm is less than 80%, it is considered to be failed.

### [Result]

As shown in Table 1, the rubber sheets made of the rubber compositions of Examples 1 to 5 had a maximum transmittance of 40% or less in the wavelength of 300 to 700nm and a maximum transmittance of 1% or less in the wavelength of 300 to 650nm, a minimum transmittance of 50% or more in the wavelength of 800 to 1600nm and a minimum transmittance of 80% or more in the wavelength of 900 to 1100nm. Therefore, the rubber compositions of Examples 1 to 5 were capable of obtaining a rubber material which absorbs visible light, which is an obstacle to sensor or the like, in a wide range and selectively transmits infrared light. On the other hand, in the rubber sheet made of the rubber composition of Comparative Example 1, the maximum transmittance in the wavelength of 300 to 700nm exceeds 40%, and in the rubber sheets made of the rubber compositions of Comparative Examples 1 and 4, the maximum transmittance in the wavelength of 300 to 650nm exceeds 1%, and the visible-light shielding property was significantly lower. Further, the rubber sheet made of the rubber compositions of Comparative Examples 2, 3, and 4 had a minimum transmittance of less than 50% in the wavelength of 800 to 1600nm, and the rubber sheet made of the rubber compositions of Comparative Examples 2, 3, and 4 had a minimum transmittance of less than 80% in the wavelength of 900 to 1100nm and a low transmissivity to infrared rays.

### Industrial Applicability

The rubber composition of the present invention can be used as a rubber material that absorbs visible light, which is an obstacle to sensor or the like, in a wide range and selectively transmits infrared light, and can be used in various products such as lenses and covers thereof.

## Claims

1. A rubber composition comprising (A) a polymer, (B) a crosslinking agent, and (C) a colorant, wherein the colorant (C) does not contain an inorganic black pigment, a minimum transmittance in a wavelength of 800 to 1600nm is 50% or more and a minimum transmittance in a wavelength of 900 to 1100nm is 80% or more, and a maximum transmittance in a wavelength of 300 to 700nm is 40% or less and a maximum transmittance in a wavelength of 300 to 650nm is 1% or less in a rubber sheet.

2. The rubber composition according to claim 1, which contains two or more kinds of organic colorants for shielding visible light as the colorant (C).

3. The rubber composition according to claim 2, wherein the organic colorant is an oil-soluble dye.

4. The rubber composition according to claim 3, wherein at least one of the oil-soluble dyes is an anthraquinone-based dye.

5. The rubber composition according to claim 4, which contains an organic peroxide as the crosslinking agent (B).

6. The rubber composition according to any one of claims 1 to 5, which is used in a product using infrared light having a wavelength of 800 to 1600nm.

7. The rubber composition according to any one of claims 1 to 5, which is used for selective wavelength absorption for LiDAR and a cover thereof.

8. The rubber composition according to any one of claims 1 to 5, which is used for an optical lens, an infrared camera lens, a lens for a biometric authentication camera, and covers thereof.

9. The rubber composition according to any one of claims 1 to 5, which is used for a biometric authentication device and a cover thereof.

10. The rubber composition according to any one of claims 1 to 5, which is used for an imaging device and a cover thereof.

11. The rubber composition according to any one of claims 1 to 5, which is used for a three-dimensional distance image camera and a cover thereof.

12. The rubber composition according to any one of claims 1 to 5, which is used for infrared communication.

13. The rubber composition according to any one of claims 1 to 5, which is used in a near-infrared spectrometer.

14. The rubber composition according to any one of claims 1 to 5, which is integrally formed as a visible light filter having a sealing property.
